# FASCICULE DE BREVET EUROPEEN

(11) **EP 3 676 517 B1**
(45) Date de publication et mention de la délivrance du brevet: **21.10.2026**
(21) Numéro de dépôt: 18759635.8
(22) Date de dépôt: 28.08.2018
(51) Int. Cl.: F16J 15/00, F16J 15/3236

(54) **JOINT ANNULAIRE POUR METTRE EN OEUVRE UNE ÉTANCHÉITÉ TOURNANTE ENTRE DEUX ÉLÉMENTS CYLINDRIQUES**
RINGDICHTUNG ZUR REALISIERUNG EINER DREHDICHTUNG ZWISCHEN ZWEI ZYLINDRISCHEN ELEMENTEN
RING SEAL FOR IMPLEMENTING A ROTARY SEAL BETWEEN TWO CYLINDRICAL ELEMENTS

(30) Priorité: 01.09.2017 FR 1758101
(43) Date de publication de la demande: 08.07.2020
(73) Titulaire: AETC SAPPHIRE, Saint Petersburg 191014 (RU)
(72) Inventeur: MANDOU, Pascal, 69550 Amplepuis (FR); VINCENT, Loic, 90000 Belfort (FR); JULLIAND, Lionel, 90000 Belfort (FR)
(74) Mandataire: Casalonga
(86) Numéro de dépôt international: PCT/EP2018/073130
(87) Numéro de publication internationale: WO 2019/043002

(56) Documents cités:
- EP-A1- 1 182 133
- EP-A1- 1 277 978
- EP-A1- 2 199 164
- EP-A1- 2 993 123
- JP-A- 2011 196 505
- US-A1- 2001 045 705

## Description

L'invention concerne un joint annulaire destiné à assurer une étanchéité entre deux éléments cylindriques pivotants l'un par rapport à l'autre, et un ensemble comprenant de tels éléments cylindriques et un tel joint annulaire.

De nombreuses applications nécessitent d'assurer une étanchéité entre un premier élément cylindrique et un deuxième élément cylindrique, lesdits éléments cylindriques étant sensiblement coaxiaux et montés pivotant l'un par rapport à l'autre.

À titre d'exemple, un dispositif de propulsion orienté, également connue sous la dénomination anglo-saxonne « propulsion oriented device » ou par l'acronyme correspondant « POD », comprend une structure cylindrique et un arbre de propulsion. La structure est solidaire d'un carter. Il est généralement prévu des paliers d'arbres réalisant une liaison pivot entre l'arbre de propulsion et la structure autour de l'axe de l'arbre de propulsion. Pour permettre la lubrification des paliers d'arbre, des joints annulaires sont disposés axialement de chaque côté des paliers d'arbre, et radialement entre la structure et l'arbre de propulsion.

De manière classique, un joint annulaire assurant une étanchéité tournante entre deux éléments cylindriques comprend un corps principal et une lèvre circonférentielle. Le corps principal est compressé dans un logement pratiqué dans un premier élément cylindrique. Ce faisant, le corps principal est maintenu fixe par rapport au premier élément cylindrique. La lèvre circonférentielle vient en contact dynamique avec un second élément cylindrique. Ce faisant, le corps principal met en œuvre une étanchéité statique avec le premier élément cylindrique et la lèvre circonférentielle met en œuvre une étanchéité dynamique avec le second élément cylindrique. EP2 199 164 A1 divulgue un tel joint.

Bien que de tels joints annulaires soient utilisés et répandus dans de multiples applications, ils présentent certains inconvénients.

En effet, lorsque survient un décalage radial important des éléments cylindriques l'un par rapport à l'autre, la lèvre circonférentielle peut s'éloigner radialement du second élément cylindrique de sorte qu'un défaut d'étanchéité survient. Par exemple, dans le cas d'un dispositif de propulsion orienté pour navire brise-glace, une déformation importante de l'arbre de propulsion peut apparaître lors d'un choc entre le dispositif de propulsion orienté et un bloc de glace. Cette déformation entraîne un décalage radial de l'arbre de propulsion par rapport à la structure cylindrique. Il peut alors en résulter une fuite d'huile servant à lubrifier un palier d'arbre dans la mer ou, à l'inverse, une inondation d'un compartiment intérieur du dispositif de propulsion.

Au vu de ce qui précède, l'invention a pour but d'améliorer l'étanchéité tournante entre deux éléments cylindriques, en particulier lors d'un fort décalage radial des éléments cylindriques l'un par rapport à l'autre.

À cet effet, il est proposé un joint annulaire comprenant un corps principal apte à mettre en œuvre une étanchéité par contact statique par rapport à un premier élément cylindrique, et une première lèvre circonférentielle apte à coopérer par friction avec une surface cylindrique d'un second élément cylindrique, lesdits éléments cylindriques étant sensiblement coaxiaux et montés pivotants l'un par rapport à l'autre.

Selon une caractéristique générale de ce joint annulaire, le corps principal comprend une surface frontale configurée pour être en contact axial avec une surface frontale du premier élément cylindrique, le corps principal comportant une seconde lèvre circonférentielle radialement opposée à la première lèvre circonférentielle et capable d'être en contact radial avec une surface cylindrique du premier élément cylindrique.

Grâce à la surface frontale ainsi configurée, le joint annulaire défini ci-dessus peut se déplacer radialement par rapport au premier élément cylindrique suite à un décalage radial important des éléments cylindriques l'un par rapport à l'autre. Dans ce cas, la première lèvre circonférentielle continue d'assurer une étanchéité par contact dynamique avec le second élément cylindrique. La seconde lèvre circonférentielle assure une étanchéité par contact statique par rapport au premier élément cylindrique. La seconde lèvre circonférentielle tend à recentrer le joint annulaire lorsque le décalage radial entre les éléments cylindriques l'un par rapport à l'autre se réduit.

Dans un mode de réalisation particulier, ladite seconde lèvre circonférentielle est configurée pour se déformer en réponse à des relativement grandes variations d'un décalage radial des éléments cylindriques l'un par rapport à l'autre, et la première lèvre circonférentielle est configurée pour se déformer en réponse à des relativement petites variations du décalage radial des éléments cylindriques l'un par rapport à l'autre.

De la sorte, il est possible de contrôler le déplacement radial du joint annulaire par rapport au premier élément cylindrique pour que celui-ci ne se produise que lorsqu'un décalage radial important des éléments cylindriques l'un par rapport à l'autre a lieu.

On peut en outre prévoir une première portion de raccordement de la première lèvre circonférentielle au corps principal et une seconde portion de raccordement de la seconde lèvre circonférentielle au corps principal, la première portion de raccordement et la seconde portion de raccordement étant sensiblement axialement adjacentes l'une par rapport à l'autre.

Avantageusement, au moins l'une des première et seconde portions de raccordement est sensiblement axialement adjacente par rapport à la surface frontale du corps principal.

Dans la présente demande, quels que soient deux objets, on entendra par « sensiblement axialement adjacent », parlant des deux objets, que les deux objets sont axialement décalés d'un décalage représentant moins de 20 % de la largeur du joint annulaire selon sa direction axiale.

De préférence, la première portion de raccordement a une épaisseur selon la direction axiale plus faible que l'épaisseur selon la direction axiale de la seconde portion de raccordement.

Dans un mode de réalisation, le joint est réalisé en polyuréthane.

On peut également prévoir que la surface frontale du corps principal est réalisée en polytétrafluoroéthylène.

Grâce à l'utilisation d'une telle conception des portions de raccordement et de tels matériaux, on peut prévoir les efforts de frottement apparaissant entre le joint annulaire et les éléments cylindriques, ainsi que les efforts radiaux mis en œuvre par les lèvres circonférentielles. On peut alors concevoir le joint annulaire pour faire travailler une lèvre circonférentielle particulière pour certaines valeurs du décalage radial des éléments cylindriques l'un par rapport à l'autre.

Avantageusement, le corps principal comprend un évidement s'étendant axialement vers l'intérieur depuis la surface frontale et un anneau de contact reçu dans ledit évidement.

Il est ainsi facile de réaliser un corps principal comprenant une surface de contact en un matériau avec des propriétés différentes du matériau du joint annulaire. On réalise facilement un joint ayant un matériau adapté au contact axial et un matériau adapté pour les contacts radiaux.

Selon un autre aspect, il est prévu un ensemble comprenant un premier élément cylindrique et un second élément cylindrique sensiblement coaxial et monté pivotant par rapport au premier élément cylindrique, le premier élément cylindrique comprenant une première surface cylindrique et une surface frontale, le second élément cylindrique comprenant une seconde surface cylindrique, ledit ensemble comprenant un premier joint tel que décrit précédemment.

Dans un mode de réalisation, le premier élément cylindrique est une structure cylindrique d'un dispositif de propulsion orienté pour véhicule marin, le second élément cylindrique étant un arbre de propulsion du dispositif de propulsion orienté, ledit second élément cylindrique étant situé radialement à l'intérieur dudit premier élément cylindrique.

On peut en outre prévoir un deuxième joint et un troisième joint tels que décrits précédemment, ledit ensemble comprenant un espace de drainage axialement délimité par le premier joint et par le deuxième joint et un espace tampon axialement délimité par le deuxième joint et par le troisième joint.

D'autres buts, caractéristiques et avantages de l'invention apparaîtront à la lecture de la description suivante, donnée uniquement à titre d'exemple non limitatif, et faite en référence aux dessins annexés sur lesquels :
- la figure 1 illustre une vue en coupe radiale d'un ensemble selon un exemple de réalisation de l'invention,
- la figure 2 illustre une vue axiale d'un joint de l'ensemble de la figure 1, et
- la figure 3 est une vue en coupe partielle du joint de la figure 2.

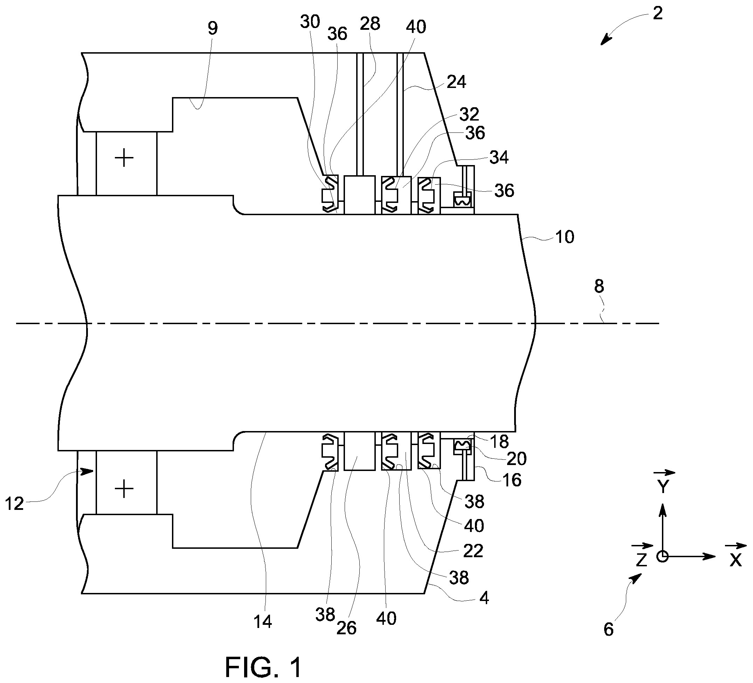

En référence à la figure 1, on a schématiquement représenté un ensemble 2. L'ensemble 2 est incorporé dans un dispositif de propulsion orienté (non représenté) pouvant être monté sur un véhicule marin tel qu'un navire, un sous-marin ou encore une plate-forme pétrolière. Toutefois, l'invention ne se limite pas à ces applications. En particulier, on peut sans sortir du cadre de l'invention envisager d'incorporer un tel ensemble dans un dispositif de propulsion, un dispositif de récupération d'énergie marémotrice ou un dispositif de génération hydroélectrique.

L'ensemble 2 comprend une structure cylindrique 4 attachée à un carter (non représenté) du dispositif de propulsion orienté. En référence aux figures 1 à 3, on a défini une base vectorielle orthonormale 6 attachée à la structure 4. La base 6 est constituée d'un vecteur *̅x̅*̅, d'un vecteur *̅y̅*̅ et d'un vecteur *̅z̅*̅.

La structure 4 est globalement cylindrique par rapport à un axe de cylindricité 8. L'axe est parallèle au vecteur *̅y̅*̅. Un alésage 9 est pratiqué à l'intérieur de la structure 4. L'alésage 9 est cylindrique autour de l'axe 8.

L'ensemble 2 comporte en outre un arbre de propulsion 10. L'arbre est solidaire d'une hélice (non représentée) du dispositif de propulsion orienté. L'arbre 10 est monté à l'intérieur de l'alésage 9. L'arbre 10 est de forme cylindrique. L'arbre 10 est disposé par rapport à la structure 4 de telle sorte que l'axe de cylindricité de l'arbre 10 coïncide sensiblement avec l'axe 8, comme dans la configuration représentée sur la figure 1. Toutefois, dans différentes situations de fonctionnement du dispositif de propulsion orienté, des déformations de l'arbre 10 pourront entraîner un décalage radial entre l'axe de cylindricité de l'arbre 10 et l'axe 8. Sauf indication contraire, les expressions « axiale » et « radiale » seront comprises comme se rapportant à l'axe 8.

L'arbre 10 est relié mécaniquement à la structure 4 par une liaison pivot autour de l'axe 8. Pour entraîner la rotation de l'arbre 10 par rapport à la structure 4, il est prévu une machine électrique (non représentée) comprenant un rotor solidaire de l'arbre 10 et un stator solidaire de la structure 4. Pour permettre le guidage en liaison pivot de l'arbre 10 par rapport à la structure 4, il est prévu un palier rotatif 12. Le palier 12 peut être du type à friction, par exemple constitué par des coussinets, ou à roulement, tel qu'un roulement à billes, un roulement à rouleaux ou encore un roulement conique. Bien qu'il soit représenté un seul palier 12, on comprendra que d'autres paliers rotatifs peuvent être prévus pour mettre en œuvre la liaison mécanique entre la structure 4 et l'arbre 10. Le palier 12 est lubrifié grâce à un fluide hydraulique (non représenté) tel que de huile ou de la graisse.

L'arbre 10 est radialement délimité par une surface 14. La surface 14 est cylindrique à base circulaire autour de l'axe de cylindricité de l'arbre 10 (qui coïncide avec l'axe 8 sur la figure 1) et de diamètre d₁₄.

La structure 4 est destinée à être immergée dans de l'eau de mer. Comme cela sera détaillé par la suite, l'ensemble 2 comporte des moyens pour mettre en œuvre une étanchéité tournante entre la structure 4 et l'arbre 10. En particulier, une étanchéité est mise en œuvre pour éviter la fuite du fluide hydraulique lubrifiant le palier 12 vers l'extérieur de l'ensemble 2, et pour éviter l'entrée d'eau de mer vers l'intérieur de l'alésage 9.

La structure 4 est axialement délimitée par une surface frontale d'extrémité 16. Un logement 18 est axialement situé entre la surface 16 et le palier 12. Le logement 18 reçoit un joint de maintenance 20. En l'espèce, le joint 20 est un joint gonflable. Le joint 20 est destiné à être gonflé lorsqu'il est mis en œuvre une maintenance de l'ensemble 2. Le joint 20 est à cet effet conçu pour mettre en œuvre une étanchéité statique par rapport à la surface 14 de l'arbre 10 lorsqu'il est gonflé.

L'ensemble 2 comporte un espace tampon 22 axialement situé entre le logement 18 et le palier 12. L'espace tampon 22 est en communication fluidique avec l'extérieur de l'ensemble 2 par l'intermédiaire d'un conduit 24. Grâce au conduit 24, l'espace tampon 22 peut être rempli avec un fluide tampon (non représenté). Le fluide tampon permet d'assurer une sécurité en cas de défaillance des moyens pour mettre en œuvre l'étanchéité tournante de l'ensemble 2.

L'ensemble 2 comporte un espace de drainage 26 axialement situé entre l'espace tampon 22 et le palier 12. L'espace de drainage 26 est en communication fluidique avec l'extérieur de l'ensemble 2 par l'intermédiaire d'un conduit 28. Le conduit 28 permet d'évacuer un fluide ayant pénétré dans l'espace de drainage 26 en raison d'une défaillance des moyens pour mettre en œuvre l'étanchéité tournante de l'ensemble 2.

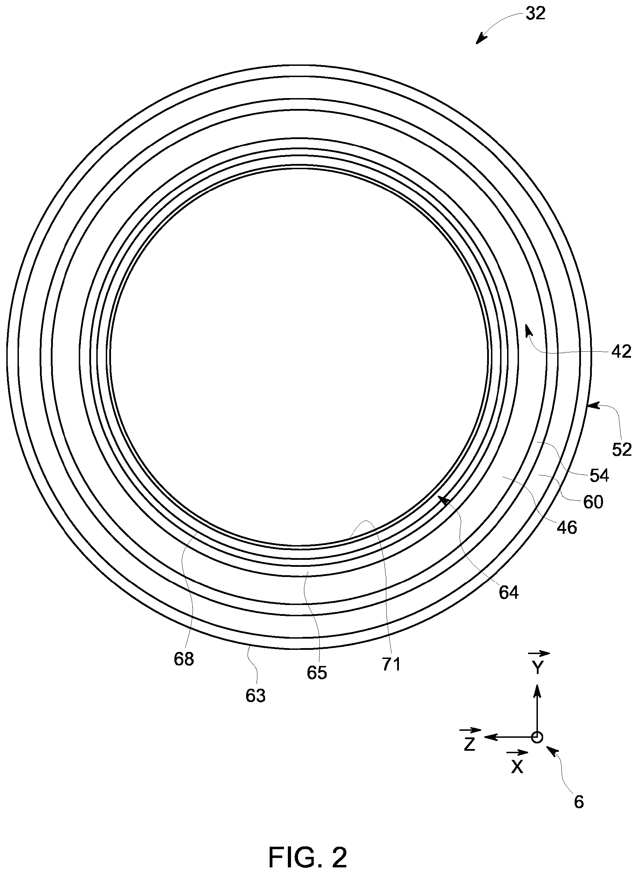

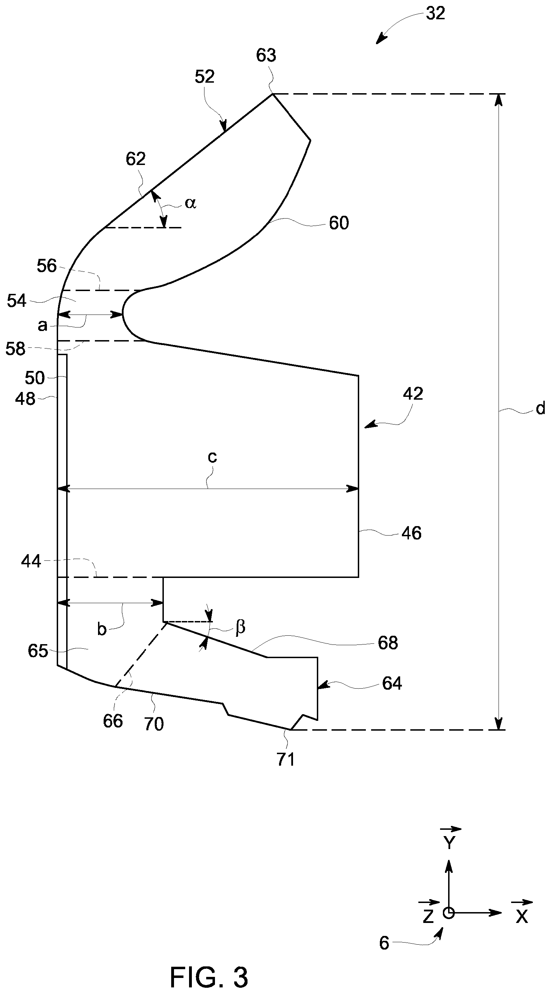

L'espace de drainage 26 s'étend axialement entre un premier joint annulaire 30 et un second joint annulaire 32. L'espace tampon 22 s'étend axialement entre le deuxième joint annulaire 32 et un troisième joint annulaire 34. Les joints 30, 32 et 34 sont sensiblement identiques. Les joints 30, 32 et 34 sont coaxiaux par rapport à l'axe 8. Le joint 32 est représenté en détail sur les figures 2 et 3. Les joints 30, 32 et 34 sont principalement réalisés en polyuréthane.

La structure 4 comprend trois logements 36 respectivement prévus pour recevoir les joints 30, 32 et 34. En particulier, chaque logement 36 est radialement délimité par une surface 38 cylindrique à base circulaire autour de l'axe 8 et de diamètre d₃₈ supérieur au diamètre d₁₄. Chaque logement 36 est axialement délimité par un épaulement 40 s'étendant radialement vers l'intérieur depuis la surface 38. Chaque épaulement 40 s'étend axialement entre deux surfaces frontales axiales (non référencées).

Bien que, dans l'exemple illustré, des moyens pour mettre en œuvre une étanchéité tournante soient prévus sur un seul côté du palier 12, on peut bien entendu envisager, sans sortir du cadre de l'invention, des moyens identiques incorporés axialement de l'autre côté du palier 12.

On a représenté sur les figures 2 et 3 le joint 32 dans une position de repos. Les dimensions du joint 32 sur les figures ne sont pas limitatives. En outre, la forme du joint 32 pourra être amenée à varier sous l'effet de la pression de contact des surfaces 14 et 38 et des pressions exercées par les fluides vis-à-vis desquels l'étanchéité est mise en œuvre.

Le joint 32 comporte un corps principal 42. Le corps principal 42 est radialement situé à l'extérieur par rapport au reste du joint 32. Sur la figure 3, on a schématiquement représenté par une ligne pointillée 44 la limite radiale intérieure du corps principal 42.

Le corps principal 42 est axialement délimité par une surface distale 46 et par une surface proximale frontale 48. Au niveau de la surface proximale 48, le corps principal 42 comporte un anneau 50 en polytétrafluoroéthylène. L'anneau 50 est reçu dans un évidement (non référencé) s'étendant axialement vers l'intérieur du corps 42 depuis la surface 48. L'anneau 50 n'est pas forcément radialement délimité par la limite 44. Dans l'exemple représenté sur la figure 3, l'anneau 50 continue de s'étendre radialement à l'intérieur de la limite 44. Pour réaliser le joint 32, le corps principal 42 peut être surmoulé sur l'anneau 50. Alternativement, l'anneau 50 peut être emmanché dans l'évidement pratiqué dans le corps principal 42 au niveau de la surface proximale 48.

En référence aux figures 1 et 3, les joints 30, 32 et 34 sont en butée axiale par leur surface proximale 48 contre une surface frontale de l'épaulement 40 de leur logement 36 respectif. Plus précisément, le joint 30 est en contact par sa surface proximale 48 contre la surface frontale adjacente au palier 12 de l'épaulement 40. Les joints 32 et 34 sont en contact par leur surface proximale 48 respective contre la surface frontale opposée au palier 12 de l'épaulement 40 respectif. En d'autres termes, comme cela est visible sur la figure 1, le joint 30 est disposé de manière symétrique aux joints 32 et 34 par rapport à un plan perpendiculaire à l'axe 8.

En référence aux figures 2 et 3, une pression exercée par un fluide, en l'espèce le fluide tampon s'agissant du joint annulaire 32, est exercée contre la surface distale 46 selon la direction du vecteur *̅x̅*̅ et dans un sens opposé à celui du vecteur *̅x̅*̅. Il en résulte une pression de contact axial entre la surface proximale 48 du joint 32 et la surface frontale de l'épaulement 40.

Le joint annulaire 32 comporte une lèvre circonférentielle externe 52. La lèvre 52 s'étend depuis le corps principal 42 radialement vers l'extérieur. La lèvre 52 est reliée à une portion radiale interne (non référencée) du corps principal 42 par une portion de raccordement 54. La limite entre la lèvre 52 et la portion de raccordement 54 est schématiquement représentée par une ligne pointillée 56. La limite entre la portion de raccordement 54 et la portion interne du corps principal 42 est schématiquement représentée par une ligne pointillée 58. La lèvre 52 s'étend selon une direction oblique formant un angle α par rapport à la direction de l'axe 8. Des déformations de la lèvre 52 permettent de faire varier l'angle α. Lorsqu'elle n'est pas déformée par le contact de la surface 62 avec la surface 38, la lèvre 52 est radialement délimitée par une arrête circulaire externe 63 de diamètre d₆₃. Le diamètre d₆₃ est supérieur au diamètre d₃₈.

La lèvre 52 est délimitée dans le sens de sa largeur par une surface intérieure 60 et une surface extérieure 62. En référence aux figures 1 et 3, la surface extérieure 62 de la lèvre 52 est en contact avec la surface 38. Le même fluide que celui qui exerce une pression sur la surface 46, en l'espèce le fluide tampon s'agissant du joint 32, exerce une pression sur la surface 60 qui tend à éloigner la lèvre 52 de la portion interne du corps principal 42. Il en résulte une pression de contact radial entre la surface 62 de la lèvre 52 et la surface 38 de la structure 4.

Le joint annulaire 32 comporte une lèvre circonférentielle interne 64 s'étendant depuis le corps principal 42 radialement vers l'intérieur. La lèvre 64 est reliée au corps principal 42 par une portion de raccordement 65. La ligne pointillée 44 délimite le corps principal 42 de la portion de raccordement 65. La limite entre la lèvre 64 et la portion de raccordement 65 est schématiquement représentée par une ligne pointillée 66. La lèvre 64 s'étend selon une direction oblique formant un angle β par rapport à la direction de l'axe 8, l'angle β pouvant varier suite à des déformations de la lèvre 64. Lorsqu'elle n'est pas déformée, la lèvre 64 est radialement délimitée par une arrête circulaire interne 71 de diamètre d₇₁. Le diamètre d₇₁ est inférieur au diamètre d₁₄.

La lèvre 64 est délimitée dans le sens de sa largeur par une surface cylindrique extérieure 68 et par une surface cylindrique intérieure 70. En référence aux figures 1 et 3, la surface intérieure 70 de la lèvre 64 est en contact avec la surface 14. Comme pour la lèvre 52, le fluide tampon exerce une pression sur la surface 68 qui tend à éloigner la lèvre 64 du corps principal 42 engendrant ainsi une pression de contact radial entre la surface 70 de la lèvre 64 et la surface 14 de l'arbre 10.

On a désigné sur la figure 3 par la référence a la largeur selon la direction axiale de la portion de raccordement 54. La référence b désigne la largeur selon la direction axiale de la portion de raccordement 65. Plus particulièrement, les références a et b correspondent aux épaisseurs minimales selon la direction axiale de la portion 54 et de la portion 65, respectivement. La référence c désigne la largeur selon la direction axiale du joint 32. La référence d représente la distance selon la direction radiale entre les arrêtes circulaires 63 et 71.

Dans l'exemple illustré, les dimensions a, b et d vérifient les relations suivantes : $b = {k}_{1} ⋅ a avec : 1 , 5 \leq {k}_{1} \leq 2$ $d = {k}_{2} ⋅ a avec : 9 \leq {k}_{2} \leq 13 .$

Par ailleurs, la dimension c est de préférence sensiblement égale à la longueur de la plus longue des lèvres 52 et 64, en l'espèce la lèvre 52.

Dans l'exemple illustré, les dimensions du joint 32 au repos sont les suivantes :
a = 5 mm ; b = 8.4 mm ; c = 25 mm et d = 55.5 mm.

Grâce au choix de telles dimensions, on contrôle laquelle des deux lèvres 52 et 64 se déforme en réponse à un décalage radial de l'arbre cylindrique 10 par rapport à la structure 4 en fonction de la valeur de ce décalage radial. En l'espèce, avec les dimensions et les matériaux choisis, la lèvre interne 64 se déforme lorsque le décalage radial de l'arbre 10 par rapport à la structure 4 est inférieur à 0,5 mm. La lèvre 52 se déforme pour un décalage radial de l'arbre 10 par rapport à la structure 4 supérieur à 0,5 mm. En outre, du fait du choix de la dimension d, les surfaces de contact 48 et 62 sont suffisamment larges pour créer un effort d'adhérence sur le corps principal 42 supérieur à l'effort de frottement exercé par l'arbre 10 sur la lèvre 64. Le joint 32 est de la sorte maintenu statique par rapport à la structure 4 dans des plages de vitesse typiques d'un dispositif de propulsion orienté, sans qu'il soit nécessaire de fournir un dispositif supplémentaire pour maintenir le joint 32 lié en rotation avec la structure 4.

De la sorte, le joint 32 met en œuvre, par son corps principal 42, une étanchéité par contact statique avec la structure 4 et, par sa lèvre circonférentielle interne 64, une étanchéité par contact dynamique avec l'arbre.

Lorsqu'il se produit une déformation de l'arbre 10 décalant radialement l'arbre 10 par rapport à la structure 4, la lèvre interne 64 se déforme lorsque le décalage radial est faible et la lèvre externe 52 se déforme lorsque le décalage radial est important. De cette manière, le corps principal 42 est radialement décalé lorsqu'il se produit un important décalage radial de l'arbre 10 par rapport à la structure 4. L'étanchéité mise en œuvre par le joint annulaire 32 continue d'être assurée en dépit de l'important décalage radial. La lèvre 52 comprimée stabilise le joint 32 dans son logement 36. Lorsque l'arbre 10 reprend sa forme initiale, et donc lorsque le décalage radial tend à diminuer, la lèvre externe 52 exerce un effort élastique sur le corps principal 42 tendant à recentrer le joint 32 autour de l'axe 8.

Dans un mode de réalisation en variante, la lèvre circonférentielle 64 comporte une rainure annulaire (non représentée) s'étendant radialement vers l'intérieur de la lèvre 64 depuis la surface 68. La rainure annulaire reçoit une bague de retenue (non représentée) pouvant être réalisée en un matériau élastique. Dans un tel mode de réalisation en variante, la déformation de la lèvre circonférentielle 64 est contrôlée par la largeur de la portion de raccordement et par l'élasticité et les dimensions de la bague de retenue.

Au vu de ce qui précède, l'invention permet de mettre en œuvre une étanchéité par rapport à un fluide entre deux éléments cylindriques pivotant l'un par rapport à l'autre améliorée notamment en cas de déformation de l'un des éléments cylindriques occasionnant un décalage radial d'un élément cylindrique par rapport à l'autre.

## Revendications

1. Joint annulaire (30, 32, 34) comprenant un corps principal (42) apte à mettre en œuvre une étanchéité par contact statique par rapport à un premier élément cylindrique (4), et une première lèvre circonférentielle (64) apte à coopérer par friction avec une surface cylindrique (14) d'un second élément cylindrique (10), la lèvre (64) est radialement délimitée par une arrête circulaire interne (71), lesdits
éléments cylindriques (4, 10) étant sensiblement coaxiaux (8) et montés pivotants l'un par rapport à l'autre, **caractérisé en ce que** le corps principal (42) comprend une surface frontale (48) configurée pour être en contact axial avec une surface frontale du premier élément cylindrique (4), le corps principal (42) comportant une seconde lèvre circonférentielle (52) radialement opposée à la première lèvre circonférentielle (64) et capable d'être en contact radial avec une surface cylindrique (38) du premier élément cylindrique (4), la seconde lèvre (52) est radialement délimitée par une arrête circulaire externe (63),
ladite seconde lèvre circonférentielle (52) étant configurée pour se déformer en réponse à des relativement grandes variations d'un décalage radial des éléments cylindriques (4, 10) l'un par rapport à l'autre, et la première lèvre circonférentielle (64) étant configurée pour se déformer en réponse à des relativement petites variations du décalage radial des éléments cylindriques (4, 10) l'un par rapport à l'autre, le joint annulaire comprenant une première portion de raccordement (65) de la première lèvre circonférentielle (64) au corps principal (42) et une seconde portion de raccordement (54) de la seconde lèvre circonférentielle (52) au corps principal (42), les épaisseurs minimales
selon la direction axiale de la première portion de raccordement (65) et de la deuxième portion de raccordement (54) étant liées par la relation : $b = {k}_{1} ⋅ a avec : 1 , 5 \leq {k}_{1} \leq 2 ,$
dans laquelle a est l'épaisseur minimale selon la direction axiale de la deuxième portion de raccordement (54) et b est l'épaisseur minimale selon la direction axiale de la première portion de raccordement (62), et la distance d selon la direction radiale entre les arrêtes circulaires (63) et (71) et l'épaisseur minimale selon la direction axiale de la deuxième portion de raccordement (54) a, étant liées par la relation: d = k2 .a avec : 9 ≤ k2 ≤ 13.

2. Joint (30, 32, 34) selon la revendication 1, dans lequel au moins l'une des première et seconde portions de raccordement (54, 65) est sensiblement axialement adjacente par rapport à la surface frontale (48) du corps principal (42).

3. Joint (30, 32, 34) selon l'une quelconque des revendications 1 ou 2, dans lequel le joint (30, 32, 34) est réalisé en polyuréthane et/ou dans lequel la surface frontale (48) du corps principal (42) est réalisée en polytétrafluoroéthylène.

4. Joint (30, 32, 34) selon l'une quelconque des revendications 1 à 3, dans lequel le corps principal (42) comprend un évidement s'étendant axialement vers l'intérieur depuis la surface frontale et un anneau de contact (50) reçu dans ledit évidement.

5. Ensemble (2) comprenant un premier élément cylindrique (4) et un second élément cylindrique (10) sensiblement coaxial (8) et monté pivotant par rapport au premier élément cylindrique (4), le premier élément cylindrique (4) comprenant une première surface cylindrique (38) et une surface frontale, le second élément cylindrique (10) comprenant une seconde surface cylindrique (14), ledit ensemble (2) comprenant un premier joint (30) selon l'une quelconque des revendications 1 à 4.

6. Ensemble (2) selon la revendication 5, dans lequel le premier élément cylindrique (4) est une structure cylindrique d'un dispositif de propulsion orienté pour véhicule marin, le second élément cylindrique (10) étant un arbre de propulsion du dispositif de propulsion orienté, ledit second élément cylindrique (10) étant situé radialement à l'intérieur dudit premier élément cylindrique (4).

7. Ensemble (2) selon la revendication 5 ou 6, comprenant en outre un deuxième joint (32) selon l'une quelconque des revendications 1 à 4 et un troisième joint (34) selon l'une quelconque des revendications 1 à 4, ledit ensemble (2) comprenant un espace de drainage (26) axialement délimité par le premier joint (30) et par le deuxième joint (32) et un espace tampon (22) axialement délimité par le deuxième joint (32) et par le troisième joint (34).

## Patentansprüche

1. Ringdichtung (30, 32, 34), umfassend einen Hauptkörper (42), der geeignet ist, eine Abdichtung durch statischen Kontakt im Verhältnis zu einem ersten zylindrischen Element (4) umzusetzen, und eine erste Umfangslippe (64), die geeignet ist, durch Reibung mit einer zylindrischen Oberfläche (14) eines zweiten zylindrischen Elements (10) zusammenzuwirken, wobei die Lippe (64) radial durch einen inneren kreisförmigen Anschlag (71) begrenzt ist,
wobei die zylindrischen Elemente (4, 10) im Wesentlichen koaxial (8) und schwenkbar im Verhältnis zueinander montiert sind, **dadurch gekennzeichnet, dass** der Hauptkörper (42) eine Stirnfläche (48) umfasst, die so eingerichtet ist, dass sie axial mit einer Stirnfläche des ersten zylindrischen Elements (4) in Kontakt steht, wobei der Hauptkörper (42) eine zweite Umfangslippe (52) aufweist, die radial der ersten Umfangslippe (64) gegenübersteht und radial mit einer zylindrischen Oberfläche (38) des ersten zylindrischen Elements (4) in Kontakt stehen kann, wobei die zweite Lippe (52) radial durch einen äußeren kreisförmigen Anschlag (63) begrenzt ist,
wobei die zweite Umfangslippe (52) so eingerichtet ist, dass sie sich als Reaktion auf relativ große Schwankungen einer radialen Verschiebung der zylindrischen Elemente (4, 10) im Verhältnis zueinander verformt, und die erste Umfangslippe (64) so eingerichtet ist, dass sie sich als Reaktion auf relativ kleine Schwankungen der radialen Verschiebung der zylindrischen Elemente (4, 10) im Verhältnis zueinander verformt, wobei die Ringdichtung einen ersten Verbindungsabschnitt (65) von der ersten Umfangslippe (64) zu dem Hauptkörper (42) und einen zweiten Verbindungsabschnitt (54) von der zweiten Umfangslippe (52) zu dem Hauptkörper (42) umfasst, wobei die minimalen Dicken in axialer Richtung des ersten Verbindungsabschnitts (65) und des zweiten Verbindungsabschnitts (54) durch die folgende Beziehung verbunden sind: $b = {k}_{1} ⋅ a wobei : 1 , 5 \leq {k}_{1} \leq 2 ,$
wobei a die minimale Dicke in axialer Richtung des zweiten Verbindungsabschnitts (54) ist und b die minimale Dicke in axialer Richtung des ersten Verbindungsabschnitts (62) ist und der Abstand d in radialer Richtung zwischen den kreisförmigen Anschlägen (63) und (71) und die minimale Dicke in axialer Richtung des zweiten Verbindungsabschnitts (54) a ist, die durch die folgende Beziehung verbunden sind: d = k2 .a, wobei: 9 ≤ k2 ≤ 13.

2. Dichtung (30, 32, 34) nach Anspruch 1, wobei mindestens einer des ersten und des zweiten Verbindungsabschnitts (54, 65) im Wesentlichen axial benachbart im Verhältnis zur Stirnfläche (48) des Hauptkörpers (42) liegt.

3. Dichtung (30, 32, 34) nach einem der Ansprüche 1 oder 2, wobei die Dichtung (30, 32, 34) aus Polyurethan hergestellt ist und/oder wobei die Stirnfläche (48) des Hauptkörpers (42) aus Polytetrafluorethylen hergestellt ist.

4. Dichtung (30, 32, 34) nach einem der Ansprüche 1 bis 3, wobei der Hauptkörper (42) eine sich axial von der Stirnfläche nach innen erstreckende Aussparung und einen in der Aussparung aufgenommenen Kontaktring (50) umfasst.

5. Baugruppe (2), die ein erstes zylindrisches Element (4) und ein zweites zylindrisches Element (10) umfasst, das im Wesentlichen koaxial (8) und schwenkbar im Verhältnis zu dem ersten zylindrischen Element (4) montiert ist, wobei das erste zylindrische Element (4) eine erste zylindrische Oberfläche (38) und eine Stirnfläche umfasst, wobei das zweite zylindrische Element (10) eine zweite zylindrische Oberfläche (14) umfasst, wobei die Baugruppe (2) eine erste Dichtung (30) nach einem der Ansprüche 1 bis 4 umfasst.

6. Baugruppe (2) nach Anspruch 5, wobei das erste zylindrische Element (4) eine zylindrische Struktur einer für Schiffsfahrzeuge ausgerichteten Antriebsvorrichtung ist, wobei das zweite zylindrische Element (10) eine Antriebswelle der ausgerichteten Antriebsvorrichtung ist, wobei das zweite zylindrische Element (10) radial innerhalb des ersten zylindrischen Elements (4) liegt.

7. Baugruppe (2) nach Anspruch 5 oder 6, ferner umfassend eine zweite Dichtung (32) nach einem der Ansprüche 1 bis 4 und eine dritte Dichtung (34) nach einem der Ansprüche 1 bis 4, wobei die Baugruppe (2) einen durch die erste Dichtung (30) und durch die zweite Dichtung (32) axial begrenzten Drainageraum (26) und einen durch die zweite Dichtung (32) und durch die dritte Dichtung (34) axial begrenzten Pufferraum (22) umfasst.

## Claims

1. An annular seal (30, 32, 34) comprising a main body (42) capable of implementing tightness by static contact with respect to a first cylindrical element (4), and a first circumferential lip (64) capable of cooperating by friction with a cylindrical surface (14) of a second cylindrical element (10), the lip (64) is radially delimited by an internal circular edge (71),
said cylindrical elements (4, 10) being substantially coaxial (8) and pivotably mounted relative to one another, **characterised in that** the main body (42) comprises a front surface (48) configured to be in axial contact with a front surface of the first cylindrical element (4), the main body (42) comprising a second circumferential lip (52) radially opposite to the first circumferential lip (64) and capable of being in radial contact with a cylindrical surface (38) of the first cylindrical element (4), the second lip (52) is radially delimited by an outer circular edge (63),
said second circumferential lip (52) being configured to deform in response to relatively large variations in a radial offset of the cylindrical elements (4, 10) relative to each other, and the first circumferential lip (64) being configured to deform in response to relatively small variations in the radial offset of the cylindrical elements (4, 10) relative to each other, the annular seal comprising a first connection portion (65) for connecting the first circumferential lip (64) to the main body (42) and a second connection portion (54) for connecting the second circumferential lip (52) to the main body (42), the minimum thicknesses along the axial direction of the first connection portion (65) and of the second connection portion (54) being related by the relationship: $b = {k}_{1} ⋅ a with : 1.5 \leq {k}_{1} \leq 2 ,$
wherein a is the minimum thickness along the axial direction of the second connection portion (54) and b is the minimum thickness along the axial direction of the first connection portion (62), and the distance d along the radial direction between the circular edges (63) and (71) and the minimum thickness along the axial direction of the second connection portion (54) a, being related by the relationship: d = k2 .a with: 9 ≤ k2 ≤ 13.

2. The seal (30, 32, 34) according to claim 1, wherein at least one of the first and second connection portions (54, 65) is substantially axially adjacent with respect to the front surface (48) of the main body (42).

3. The seal (30, 32, 34) according to any one of claims 1 or 2, wherein the seal (30, 32, 34) is made of polyurethane and/or wherein the front surface (48) of the main body (42) is made of polytetrafluoroethylene.

4. The seal (30, 32, 34) according to any one of claims 1 to 3, wherein the main body (42) comprises a recess axially inwardly extending from the front surface and a contact ring (50) received in said recess.

5. An assembly (2) comprising a first cylindrical element (4) and a second cylindrical element (10) substantially coaxial (8) and pivotably mounted relative to the first cylindrical element (4), the first cylindrical element (4) comprising a first cylindrical surface (38) and a front surface, the second cylindrical element (10) comprising a second cylindrical surface (14), said assembly (2) comprising a first seal (30) according to any one of claims 1 to 4.

6. The assembly (2) according to claim 5, wherein the first cylindrical element (4) is a cylindrical structure of an oriented propulsion device for a marine vehicle, the second cylindrical element (10) being a propulsion shaft of the oriented propulsion device, said second cylindrical element (10) being radially located inside said first cylindrical element (4).

7. The assembly (2) according to claim 5 or 6, further comprising a second seal (32) according to any one of claims 1 to 4 and a third seal (34) according to any one of claims 1 to 4, said assembly (2) comprising a drainage space (26) axially delimited by the first seal (30) and by the second seal (32) and a buffer space (22) axially delimited by the second seal (32) and by the third seal (34).
